# EUROPÄISCHE PATENTSCHRIFT

(11) **EP 0 808 060 B1**
(45) Veröffentlichungstag und Bekanntmachung des Hinweises auf die Patenterteilung: **12.12.2001**
(21) Anmeldenummer: 97107281.4
(22) Anmeldetag: 02.05.1997
(51) Int. Cl.: H04N 5/44

(54) **Verstärkerschaltung mit Filter für digitale und analoge Signale**
Amplifier circuit with filter for digital and analog signals
Circuit amplificateur avec filtre pour signaux numériques et analogiques

(30) Priorität: 15.05.1996 DE 19619750
(43) Veröffentlichungstag der Anmeldung: 19.11.1997
(73) Patentinhaber: DEUTSCHE THOMSON-BRANDT GMBH, 78048 Villingen-Schwenningen (DE)
(72) Erfinder: Dener, Ali, 78083 Dauchingen (DE); Hirt, Helmut, 78098 Triberg (DE); Armbruster, Veit, 78112 St. Georgen (DE); Sauter, Reinhard, 78052 Villingen-Schwenningen (DE)
(74) Vertreter: Rossmanith, Manfred, Dr.

(56) Entgegenhaltungen:
- EP-A- 0 065 150
- EP-A- 0 696 854
- DE-A- 4 427 396
- PHILIPS SEMICONDUCTORS: "TDA9819 Multistandard vision and sound-IF PLL with DVB-IF processing" DATA SHEET TDA9819, INTEGRATED CIRCUITS IC02, PRODUCT SPECIFICATION,14 JULI 1998, Seiten 1-227, XP002084575 Available from Internet: <url:http://www.semiconductors.philips.com > 17 November 1998

## Beschreibung

Die Erfindung geht aus von einer Verstärkerschaltung mit Filtern für digitale und analoge Signale gemäß dem Oberbegriff des Anspruchs 1. Multistandard-ZF-Verstärker (ZF = Zwischenfrequenz) dienen zum analogen Empfang für unterschiedliche Normen. Für jede Norm muß der ZF-Verstärker entsprechende Signale selektieren. Die Selektion geschieht im ZF-Bereich auf einer jeweils festeingestellten Frequenz. Für die Selektion werden Filter verwendet. Bei analogem Empfang wird eine Nyquist Flanke benötigt, um ein geeignetes Signal zu gewinnen. Bei einem digitalen Signal ist dieses nicht notwendig.

Aus der EP-A 0 006 510 ist ein ZF-Verstärker für Mehrnormen-Fernsehempfänger bekannt. Bei dem bekannten Verstärker wird für alle Normen dasselbe Oberflächenwellenfilter verwendet.

Aus der DE-A 44 27 396 ist ein Verfahren zur Verarbeitung von digitalen und analogen Eingangssignalen bekannt. Bei diesem Verfahren werden abhängig davon, ob digitale oder analoge Signale empfangen werden, einem Schwingungserzeuger unterschiedliche Bauelemente zugeschaltet.

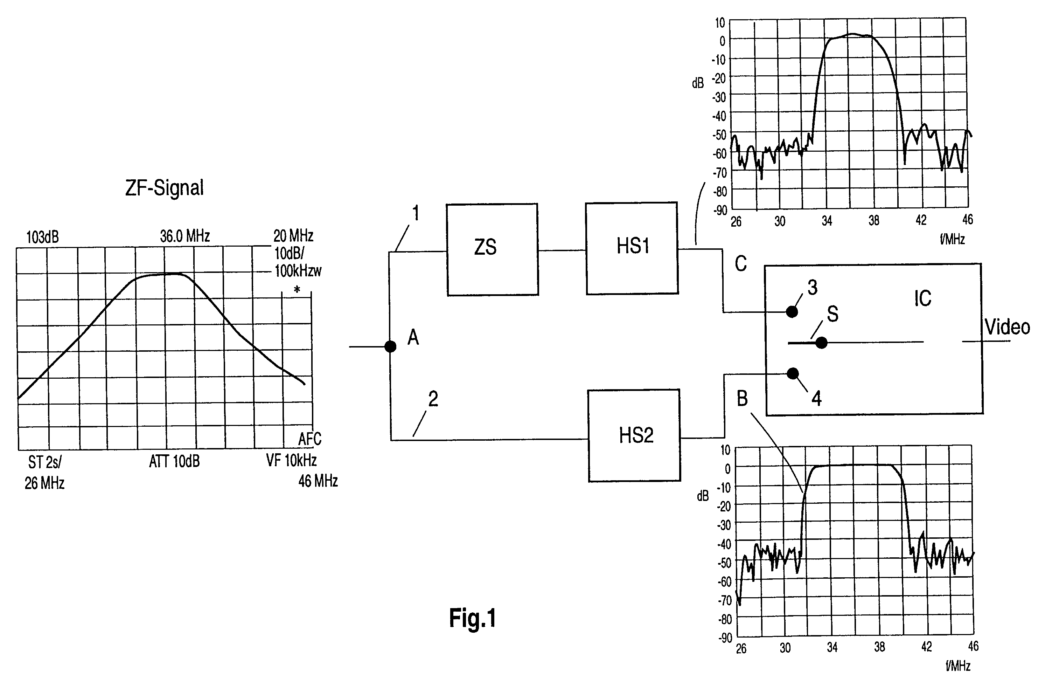

Bei einer bekannten in Fig. 1 dargestellten Signalverarbeitungsstufe, die analoge und digitale Signale verarbeitet, wird in Abhängigkeit vom empfangenen Signal der entsprechende analoge oder digitale Signalpfad geschaltet. Nachteilig hierbei ist der relativ hohe Aufwand für die analoge Signalverarbeitung.

Der Erfindung liegt die Aufgabe zugrunde mit geringem Aufwand eine Schaltung zu schaffen, die sowohl analoge als auch digitale Signale verarbeitet. Diese Aufgabe wird durch eine Verstärkerschaltung gemäß Anspruch 1 gelöst. Vorteilhafte Weiterbildungen der Erfindung sind in den Unteransprüchen angegeben.

Erfindungsgemäß werden Filter für digitale und analoge Signale verwendet. Die Filter für digitalen Signalempfang werden bei analogem Signalempfang den analogen Filtern zugeschaltet. Durch das Hinzuschalten der digitalen Filter vor das analoge Filter ist es möglich, auf ansonsten zusätzlich zur Hauptselektion benötigte Selektionsmittel für das analoge Signal zu verzichten. Bei digitalem Signalempfang werden die analogen Filter nicht zugeschaltet, da das digitale Signal die größtmögliche Bandbreite benötigt, das analoge Filter jedoch die Bandbreite begrenzen würde. Zum Entkoppeln der Filter für analoge und digitale Signalverarbeitung wird eine Entkopplungsstufe verwendet. Die Entkopplungsstufe ist vorzugsweise als Emitterfolger ausgebildet. Die Filter für analoge und digitale Signalverarbeitung werden aus Oberflächenwellenfiltern gebildet. Die Filter werden vorzugsweise in Kaskadenschaltung angeordnet.

Vorteilhaft bei einer derartigen Anordnung ist, daß die Zusatzselektionsmittel im analogen Signalverarbeitungspfad entfallen können. Diese Zusatzselektion wird nun durch die digitalen Filter durchgeführt.

Ein weiterer Vorteil ist, daß bei den Oberflächenwellenfiltern Amplitudenfrequenzgang- und Gruppenlaufzeit-Charakteristika unabhängig voneinander gestaltet werden können. Durch die Kaskadenschaltung kann eine erwünschte Gruppenlaufzeit für den analogen Signalausgang flexibler gestaltet werden. Das ist möglich durch die Überlagerung der Gruppenlaufzeiten des analogen und digitalen Oberflächenwellenfilters. Ansonsten unvermeidbare Rippel im Signalverlauf am Ausgang des analogen Oberflächenwellenfilters können durch die Kaskadenschaltung und ihrem gegenphasigen Signalverlauf von dem digitalen Oberflächenwellenfilter HS2 kompensiert werden. Der erwünschte Gruppenlaufzeitverlauf des analogen Oberflächenwellenfilters kann durch den passenden Verlauf von dem digitalen Oberflächenwellenfilter erzielt werden.

Die Erfindung wird im folgenden anhand der Zeichnung erläutert. Darin zeigen
- Fig. 1: eine bekannte Verstärkerschaltung,
- Fig. 2: eine erfindungsgemäße Verstärkerschaltung und
- Fig. 3,4: Weiterbildungen der erfindungsgemäßen Verstärkerschaltung.

Fig. 1 zeigt eine bekannte Verstärkerschaltung. Das ZF-Signal vom Tuner, der hier nicht dargestellt ist, gelangt über den Punkt A in den analogen Pfad 1 und in den digitalen Pfad 2. Der analoge Pfad 1 wird gebildet aus Selektionsmitteln ZS und dem Oberflächenwellenfilter HS1. Der digitale Pfad wird gebildet durch das Oberflächenwellenfilter HS2. Der Schalter S der Signalverarbeitungsstufe IC schaltet das Signal für den analogen Empfang bzw. den digitalen Empfang zur Weiterverarbeitung in der Signalverarbeitungsstufe IC durch. Am Punkt B ist das Signal dargestellt, welches sich durch das Oberflächenwellenfilter HS2 ergibt. Am Punkt C ist das Signal dargestellt, welches sich durch die zusätzlichen Selektionsmittel ZS und dem Oberflächenwellenfilter HS1 ergibt.

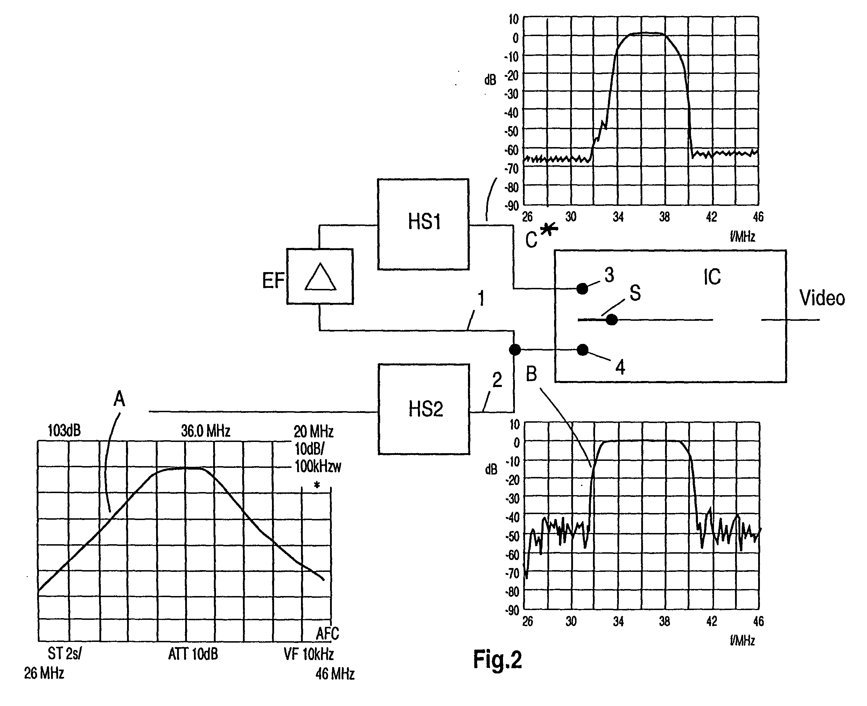

Fig. 2 zeigt die erfindungsgemäße Schaltungsanordnung. Das ZF Signal des Tuners gelangt vom Punkt A aus über das Oberflächenwellenfilter HS2 an den Punkt B. Vom Punkt B gelangt das Signal an den Eingang 4 des Schalters S in der Signalverarbeitungsstufe IC. Vom Punkt B gelangt das Signal weiterhin über den Emitterfolger EF an das Oberflächenwellenfilter HS1. Vom Oberflächenwellenfilter HS1 gelangt das Signal über den Punkt C* an den Eingang 3 des Schalters S.

Der Schalter S schaltet in Abhängigkeit von der Art des empfangenen Signals jeweils auf den Eingang 3 für analoge Signale oder den Eingang 4 für digitale Signale. Das Umschalten des Schalters S erfolgt durch die Signalverarbeitungsstufe IC. Die Unterscheidung, ob ein digitales oder analoges Signal empfangen wird, ermittelt die Signalverarbeitungsstufe IC aus der Signalfolge.

Es ist auch möglich, daß der Benutzer beim Programmieren der empfangenen Sender der Signalverarbeitungsstufe IC mitteilt, ob es sich um ein analoges oder digitales Empfangsignal handelt. Beim späteren Anwählen des Programmplatzes erkennt die Signalverarbeitungsstufe, daß unter diesem angewählten Programmplatz ein analoges oder digitales Signal empfangen wird, und der Schalter wird entsprechend in Schalterstellung 3 oder 4 geschaltet.

Der Signalverlauf am Punkt A und Punkt B ist unverändert. Am Punkt C* ist im Vergleich zum Punkt C aus Fig. 1 der Signalverlauf fast identisch. Der fast identische Signalverlauf ist erfindungsgemäß angestrebt, damit am Schaltkontakt 3 des Schalters wiederum ein Signal für die analoge Signalverarbeitung ansteht. Durch die Kaskadenschaltung der beiden Oberflächenwellenfilter HS1 und HS2 ist am Punkt C* eine verbesserte Signalkurve zu sehen.

Die entfallenen Selektionsmittel ZS dienten zur Unterdrückung von unerwünschten Signalen wie Nachbarträger. Das Oberflächenwellenfilter HS2 hat einen Durchlaßbereich, der größer ist, als der des Oberflächenwellenfilters HS1. Dadurch wird der Durchlaßbereich des Filters HS1 nicht beeinträchtigt. Außerhalb des Durchlaßbereiches wird jedoch eine zusätzliche Selektion erreicht.

Die Selektionsmittel ZS sind also nicht mehr erforderlich, da bei der Kaskadenschaltung der beiden Oberflächenwellenfilter HS2 und HS1 eine Gesamtselektion erreicht wird, die für die analoge Signalverarbeitung verwendbar ist.

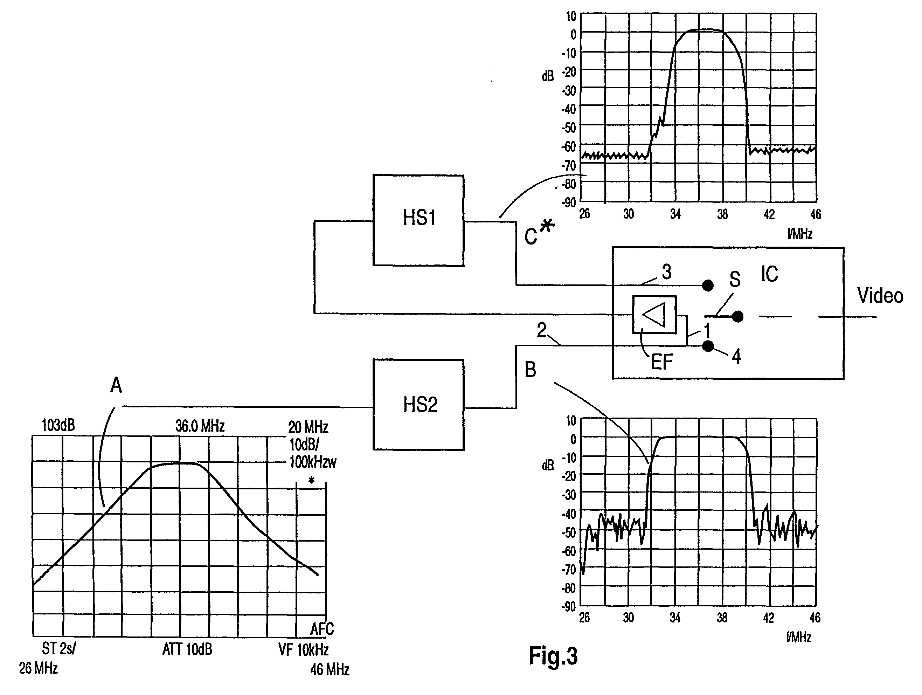

Fig. 3 zeigt eine Weiterbildung der erfindungsgemäßen Lösung. Der Emitterfolger EF ist in die Signalverarbeitungsstufe IC integriert worden. Die Schaltung arbeitet ansonsten wie unter Fig. 2 beschrieben.

Vorteilhaft ist, daß bei den Oberflächenwellenfilter HS1, HS2 Amplitudenfrequenzgang- und Gruppenlaufzeit-Charakteristika unabhängig voneinander gestaltet werden können. Durch die Kaskadenschaltung kann eine erwünschte Gruppenlaufzeit am Punkt C* (Fig. 2, 3) durch die Überlagerung der Gruppenlaufzeiten in den Oberflächenwellenfiltern HS1, HS2 flexibler gestaltet werden. Ansonsten unvermeidbare Rippel in dem Ausgangssignal des Oberflächenwellenfilters HS1 (Fig. 1, Punkt C), können durch die Kaskadenschaltung durch ihren gegenphasigen Verlauf vom dem Oberflächenwellenfilter HS2 kompensiert werden (Fig. 2,3 Punkt C*). Der erwünschte Gruppenlaufzeitverlauf in dem Oberflächenwellenfilter HS1 kann durch den angepaßten Verlauf von dem Oberflächenwellenfilter HS2 gewonnen werden.

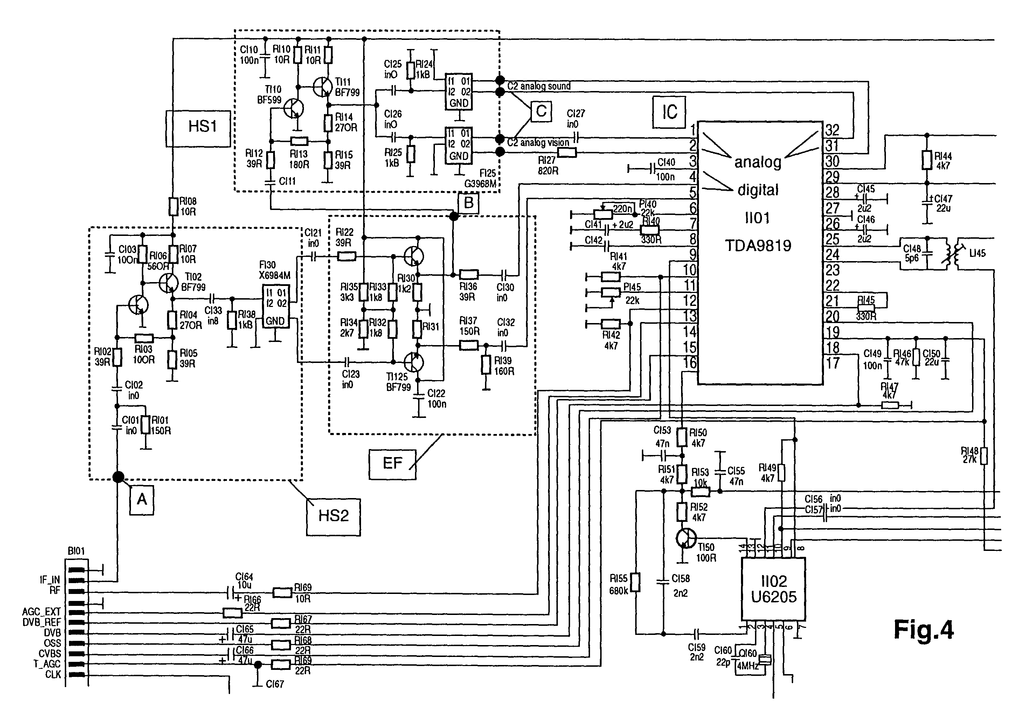

Fig. 4 zeigt eine Weiterbildung der erfindungsgemäßen Schaltung. In dem Schaltbild sind die Baugruppen zusammengefaßt und markiert worden, die in den vorhergehenden Figuren als Blöcke dargestellt sind. Die Funktionsweise und das Zusammenarbeiten der Bauelemente ist anhand der Blockschaltbilder erläutert worden. Es ist deutlich zu erkennen, daß es nur einen Signaleingang A gibt. Nach diesem Signaleingang A liegt das Oberflächenwellenfilter HS2 für den digitalen Signalpfad. Anschließend gelangt das Signal zum Emitterfolger EF und über die Pins 4 und 5 in den integrierten Schaltkreis IC. Der Meßpunkt B war in den Blockschaltbildern vor dem Emitterfolger und auch das Signal wurde vor dem Emitterfolger abgegriffen. In dieser aufgebauten Schaltung wird das Signal hinter dem Emitterfolger abgegriffen, so daß diese Filter auch noch für den digitalen Teil ausgenutzt werden können. Der Signalverlauf am Punkt B ist identisch mit dem Signalverlauf des vorigen Punktes B aus Fig. 2 und 3. Nach dem Emitterfolger EF gelangt das Signal zum analogen Oberflächenwellenfilter HS1. Der analoge Teil ist aufgeteilt in Bild- und Ton und gekennzeichnet durch die Ausgänge C1 "analog vision" und C2 "analog sound". Vorteihaft und Unterschiedlich zu Fig. 2 und 3 ist, daß der Emitterfolger EF sowohl für den digitalen als auch für den analogen Part verwendet wird.

## Patentansprüche

1. Verstärkerschaltung für ZF-Signale unterschiedlicher Standards zur wahlweisen Verarbeitung digitaler und analoger Signale,
mit einem Eingang (A) zum wahlweisen Empfang digitaler und analoger Signale,
mit einem ersten Pfad (2), der ein erstes Filter (HS2) aufweist, zur Verarbeitung digitaler Signale,
mit einem zweiten Pfad (1), der ein zweites Filter (HS1) aufweist, zur Verarbeitung analoger Signale,
**dadurch gekennzeichnet, daß**
der Ausgang des ersten Filters (HS2) mit dem Eingang des zweiten Filters (HS1) verbunden ist,
daß ein Schaltmittel (S) vorgesehen ist, dessen erster Eingang (4) mit dem Ausgang des ersten Filters (HS2) verbunden ist, dessen zweiter Eingang (3) mit dem Ausgang des zweiten Filters (HS1) verbunden ist und dessen Ausgang ein Signal zur weiteren Verarbeitung abgibt, und
daß das Schaltmittel (S) derart angesteuert ist, daß beim Empfang von digitalen Signalen der erste Eingang (4) des Schaltmittels (S) mit dessen Ausgang verbunden ist und daß beim Empfang von analogen Signalen der zweite Eingang (3) des Schaltmittels (S) mit dessen Ausgang verbunden ist.

2. Verstärkerschaltung nach Anspruch 1, **dadurch gekennzeichnet, daß** die Filter (HS1, HS2) als Oberflächenwellenfilter ausgebildet sind.

3. Verstärkerschaltung nach Anspruch 1, **dadurch gekennzeichnet, daß** die Filter (HS1, HS2) in Kaskadenschaltung angeordnet sind.

4. Verstärkerschaltung nach Anspruch 1, **dadurch gekennzeichnet, daß** die Filter (HS1, HS2) über eine Entkopplungsstufe (EF) miteinander verbunden sind.

5. Verstärkerschaltung nach Anspruch 4, **dadurch gekennzeichnet, daß** die Entkopplungsstufe (EF) als Emitterfolger ausgebildet ist.

6. Verstärkerschaltung nach Anspruch 1, **dadurch gekennzeichnet, daß** durch die Gruppenlaufzeit der Oberflächenwellenfilter (HS1, HS2) der gesamte Gruppenlaufzeitverlauf veränderbar ist.

7. Verstärkerschaltung nach Anspruch 1, **dadurch gekennzeichnet, daß** durch den Amplitudenfrequenzgang der Oberflächenwellenfilter (HS1, HS2) der gesamte Amplitudenfrequenzgangverlauf veränderbar ist.

## Claims

1. Amplifier circuit for IF-signals of different standards for alternatively processing digital or analogue signals including
an input (A) for alternatively receiving digital and analogue signals,
a first path (2) including a first filter (HS2) for processing digital signals,
a second path (1) including a second filter (HS1) for processing analogue signals,
**characterized in that**
the output of the first filter (HS2) is connected to the input of the second filter (HS1),
switching means (S) is provided having a first input (4) connected to the output of the first filter (HS2) and having a second input (3) connected to the output of the second filter (HS1) and having an output providing a signal for further processing and
said switching means (S) is controlled in such a way that during reception of digital signals the first input (4) of said switching means (S) is connected to its output and that during reception of analogue signals the second input (3) of said switching means (S) is connected to its output.

2. Amplifier circuit according to claim 1, **characterized in that** said filters (HS1, HS2) are formed by surface acoustic wave filters.

3. Amplifier circuit according to claim 1, **characterized in that** said filters (HS1, HS2) are arranged in a cascade circuit.

4. Amplifier circuit according to claim 1, **characterized in that** the filters (HS1, HS2) are joined by a decoupling stage (EF).

5. Amplifier circuit according to claim 4, **characterized in that** the decoupling stage (EF) is formed by an emitter follower.

6. Amplifier circuit according to claim 2, **characterized in that** the total group delay time response profile can be altered by the group delay time of said surface acoustic wave filters (HS1, HS2).

7. Amplifier circuit according to claim 2, **characterized in that** the total amplitude frequency response profile can be altered by the amplitude frequency response of the surface acoustic wave filters (HS1, HS2).

## Revendications

1. Circuit amplificateur pour des signaux à fréquence intermédiaire de différentes normes pour le traitement au choix de signaux numériques et analogiques,
avec une entrée (A) pour la réception au choix de signaux numériques et analogiques,
avec un premier chemin (2), qui présente un premier filtre (HS2), pour le traitement de signaux numériques,
avec un deuxième chemin (1), qui présente un deuxième filtre (HS1), pour le traitement de signaux analogiques,
**caratérisé en ce que** la sortie du premier filtre (HS2) est reliée à l'entrée du deuxième filtre (HS1),
en ce qu'un dispositif de commutation (S) est prévu, sa première entrée (4) étant reliée à la sortie du premier filtre (HS2), sa deuxième entrée (3) étant reliée à la sortie du premier filtre (HS1) et sa sortie fournit un signal pour le traitement ultérieur, et
en ce que le dispositif de commutation (S) est commandé de sorte que, lors de la réception de signaux numériques, la deuxième sortie (3) du dispositif de commutation (S) est reliée à sa sortie.

2. Circuit amplificateur conforme à la revendication 1, **caractérisé en ce que** les filtres (HS1, HS2) sont constitués comme des filtres d'ondes de surface.

3. Circuit amplificateur conforme à la revendication 1, **caractérisé en ce que** les filtres (HS1, HS2) sont montés en cascade.

4. Circuit amplificateur conforme à la revendication 1, **caractérisé en ce que** les filtres (HS1, HS2) sont reliés entre eux via un étage de découplage (EF).

5. Circuit amplificateur conforme à la revendication 4, **caractérisé en ce que** l'étage de découplage (EF) est constitué comme un émetteur-suiveur.

6. Circuit amplificateur conforme à la revendication 1, **caractérisé en ce que** la totalité de la courbe du temps de propagation de groupe est modifiable par le temps de propagation de groupe des filtres d'ondes de surface (HS1, HS2).

7. Circuit amplificateur conforme à la revendication 1, **caractérisé en ce que** la totalité de la courbe de réponse en fréquences d'amplitude est modifiable par la réponse en fréquences d'amplitude des filtres d'ondes de surface (HS1, HS2).
